# EUROPEAN PATENT APPLICATION

(11) **EP 0 686 541 A1**
(43) Date of publication of application: **13.12.1995**
(21) Application number: 95108788.1
(22) Date of filing: 07.06.1995
(51) Int. Cl.: B62D 6/00

(54) **Controlled torque power steering system**

(30) Priority: 07.06.1994 US 255238
(71) Applicant: EATON CORPORATION, Cleveland, Ohio 44114-2584 (US)
(72) Inventor: Carlson, David Kim, Oakland, Michigan 48363 (US); Sherman, David John, Utica, Michigan 48317 (US); Rea, Irvin Bruce, Royal Oak, Michigan 48067 (US); Curnow, John Wayne, Utica, Michigan 48317 (US); Padula, Santo Anthony, Lake Orion, Michigan 48360 (US)
(74) Representative: Rüger, Rudolf, Dr.-Ing.

(57) **Abstract**

A controlled torque power assist steering system (10) for a vehicle for controlling the level of power assist provided by an hydraulic power assist steering mechanism (20) in response to torque exerted on a steering wheel (12) of the vehicle by a driver. The system includes a torque sensor (26) mounted on the steering column (16) of the vehicle which senses the torque exerted thereon as the steering wheel (12) is turned. The torque sensor (26) generates a corresponding torque signal (52) which is applied to an electronic controller (28), which in turn generates a current control signal to an electronically variable orifice (EVO) actuator valve (22). In a first embodiment, the value of the current control signal is based upon a predetermined response curve (35) of input torque versus EVO drive current. In a second embodiment, a vehicle speed signal is also supplied to the controller (28) and the desired response curve (35) is varied in accordance with changes in vehicle speed. The preferred form of the controller (28) comprises a microcomputer-based digital controller (40) that controls the EVO actuator valve (22) using pulse width modulation control.

## Description

### Background and Summary of the Invention

The present invention relates to automotive power steering systems and, in particular, to a variable assist power steering system that controls the level of assist in accordance with the torque applied to the steering wheel.

Power-assisted steering systems were initially added to vehicles to overcome the disadvantage of manual steering systems which typically required very high steering efforts, especially on large vehicles, during low-speed maneuvers such as during parking maneuvers. For many years, power steering systems provided a constant level of assist regardless of the amount of assist actually required to comfortably maneuver the vehicle. In other words, even with a manual power steering system, it typically was not difficult to maneuver the vehicle while underway at relatively high speeds, but rather only became difficult at very low speeds when the lack of forward motion of the vehicle significantly increased the amount of steering effort required. Consequently, automobiles with conventional power steering systems typically provided an over-assisted condition at highway speeds, thereby providing the operator with very little road "feel".

In order to overcome this disadvantage of conventional power steering systems, and in response to consumer demand, power steering systems which provide a variable level of assist have in recent years become commercially available. All of the presently available commercial variable-assist power steering systems operate on the same fundamental principle--namely, the level of assist is varied in accordance with vehicle speed. In particular, current systems provide a high level of assist at low vehicle speeds and progressively lower levels of assist as the speed of the vehicle increases. Such systems typically employ a speed sensor that provides an output signal to a controller which in turn controls an electronically controllable variable orifice (EVO) actuator that controls the amount of fluid applied by the power steering pump to the steering gear of the vehicle. In other words, at low vehicle speeds the controller provides an appropriate current signal to the EVO actuator to increase the fluid flow from the power steering pump to thereby provide a high level of assist. Conversely, as the speed of the vehicle increases, the controller provides an appropriate control signal to the EVO actuator to reduce the level of flow from the power steering pump and thereby reduce the amount of assist provided.

Speed-sensitive variable-assist power steering systems of this type, however, suffer one principal disadvantage. In particular, at highway speeds where the level of assist provided is relatively low, the pressure in the power steering pump is, consequently, also low. Accordingly, if, while operating a vehicle at highway speeds, it becomes necessary for the operator of the vehicle to execute a rapid evasive maneuver, there may be insufficient pressure in the power steering system to respond rapidly enough to the steering input. Consequently, in order to overcome this disadvantage, speed-sensitive-variable-assist power steering systems presently also include a handwheel sensor which is mounted on the steering column of the vehicle to sense the rate of rotation of the steering wheel. The handwheel sensor signal, as well as the speed sensor signal, are then both provided to the controller, and the controller is typically programmed to monitor both input signals and provide an appropriate level of assist in accordance with an evaluation of both input signals. In particular, the controller in such systems is usually programmed to respond to the speed sensor in the conventional manner. However, if the output from the handwheel rate sensor is high, the controller will provide a relatively high level of assist, even though the output from the speed sensor is low, to enable an operator to execute an evasive maneuver. In other words, the controller examines both input signals from the handwheel sensor and the speed sensor and responds to the input signal demanding the highest level of assist. A present commercial system which operates in this manner is disclosed and described in U.S. Patent No 4,629,025.

Although variable-assist power steering systems of the above-described type operate satisfactorily, they suffer the disadvantages of added complexity and cost associated with the addition of the handwheel sensor. Consequently, a substantial amount of design effort has been expended over the last few years in an attempt to eliminate the need for a handwheel sensor in such systems. To date, however, a commercially acceptable system that does not require a handwheel sensor has yet to be developed.

The present invention takes a fundamentally different approach to the implementation of a variable-assist power steering system. In particular, rather than using a speed signal as the primary means of controlling the level of assist provided by the power steering system, the present invention instead proposes to directly monitor the torque applied to the steering wheel and use this torque signal to control the level of assist provided by the power steering system. In other words, the present invention proposes to control steering effort by directly monitoring the degree of steering effort inputted by the driver of the vehicle. In this manner, the system can be designed to provide either a constant level of steering effort, regardless of speed, or a programmable level of steering effort which also varies in response to vehicle speed. Significantly, because the present system senses torque, the system is able to detect when the steering gear is running low on fluid flow as the required level of input torque will go up correspondingly. Therefore, the present system does not need a handwheel sensor to compensate for low-flow conditions at highway speeds. Moreover, this characteristic of the present system enables it to automatically react to external conditions, such as a tire failure or simply the long-term wear in the steering gear of the vehicle, to enable the operator to maintain appropriate control of the vehicle. Since the present system continuously monitors the steering wheel torque exerted by the driver, vehicle-to-vehicle variability is virtually eliminated. Thus, system variability due to variations in system voltage, steering pump fluid flow, valve leakage, steering wheel shaft universal joint friction, variable orifice area tolerances, and torque bar variation is virtually eliminated by directly monitoring steering wheel torque.

Additionally, it will be appreciated that the present system provides a much more rapid response time than conventional speed-sensitive variable-assist power steering systems. In particular, in responding to an evasive maneuver, for example, a conventional speed-sensitive variable-assist power steering system must first detect the increased rate of rotation of the steering wheel as sensed by the handwheel sensor before increasing the level of assist. Accordingly, rapid movement of the steering wheel must be initiated before the system can respond. With the torque control system of the present invention, however, the system is able to immediately detect the increased torque applied to the steering wheel which subsequently causes the rapid movement of the wheel. In other words, the present system responds to the force that causes the movement, not the resulting movement. Consequently, the response time of the system is greatly enhanced.

A further advantage of the present variable assist power steering system is an attendant improvement in fuel economy, particularly in vehicles with relatively small, low torque engines. In a conventional variable assist power steering system, the level of assist when the vehicle is idling or being driven at relatively low speeds, is high even when the vehicle is simply being driven in a relatively straight line with minimal steering input. In other words, conventional variable assist power steering systems only reduce the level of assist with higher vehicle speeds. Consequently, the majority of the time, especially in urban driving conditions, conventional systems provide a relatively high level of assist. High assist levels equate to high hydraulic pressure levels. Consequently, with such conventional systems there is a substantially continuous pressure drop in the hydraulic steering system of approximately 50 psi even when the vehicle is simply idling at a traffic light. This high pressure quiescent or "null" condition of conventional systems serves to continuously load the power steering pump which in turn loads the engine.

The present system being primarily responsive to steering torque rather than vehicle speed, provides a minimum power assist level in the quiescent or null condition which equates to a low hydraulic pressure level and greater engine efficiency. Consequently, when little or no steering effort is inputted by the driver of the vehicle, a low level of power assist is supplied by the system. Typically, the present system maintains a minimal pressure differential in the hydraulic steering system of approximately 2 psi under such quiescent conditions. As a result, under most driving conditions, especially in urban settings, the present control system imposes minimal loading on the power steering pump and consequently minimum loading on the vehicle engine. In vehicles with relatively small, low torque engines, this efficiency savings can approach 0.5 miles per gallon.

In general, the variable-assist power steering system, according to the present invention, comprises a torque sensor that is coupled directly to the steering column of the vehicle to provide a torque signal that is supplied to the controller. The torque sensor generates a torque signal indicative of the steering torque exerted by the driver when turning the steering wheel. The torque signal from the torque sensor is provided to an electronic controller which determines the appropriate current drive signal to be supplied to the electronically controllable fluid flow valve of the hydraulic assist mechanism. The drive signal controls the valve so as to increase or decrease the fluid flow to the hydraulic assist mechanism to thereby vary the level of assist to achieve the desired level of steering effort. The system thus controls the level of steering assist in direct response to the steering wheel torque sensed by the torque sensor.

In an alternative preferred embodiment of the system, the desired level of steering effort for a given sensed torque input is varied according to vehicle speed. For this purpose, a speed sensor is provided for sensing the ground speed of the vehicle. The controller thus determines the appropriate level of assist based upon the sensed torque input as well as the observed speed of the vehicle, and then produces the appropriate drive signal to control the electronically controllable fluid flow valve accordingly.

In addition, the preferred embodiments of the present invention further include a current feedback monitoring circuit for monitoring the actual current flow through the electronically controlled valve to ensure that the desired level of assist is achieved regardless of variations in battery voltage or coil impedance.

Both analog and digital versions of the controller are disclosed.

### Brief Description of the Drawings

Additional objects and advantages of the present invention will become apparent from a reading of the detailed description of the preferred embodiments which makes reference to the drawings in which:
Figure 1 is a simplified illustration of a controlled torque power assist steering system in accordance with a preferred embodiment of the present invention showing diagrammatically the system together with a steering wheel, steering column and rack and pinion steering mechanism of a vehicle, a conventional hydraulic power assist mechanism in fluid communication with the steering mechanism, and an optional speed sensor operably associated with a wheel of the vehicle;
Figure 2 is a graph of an exemplary response curve of the controller of the system of Figure 1;
Figure 3 is a schematic drawing of a preferred embodiment of the torque sensor and its associated signal conditioning circuitry;
Figure 4 is a detailed schematic diagram of an analog version of the controller of the present invention;
Figure 5 is a schematic diagram of the driver circuit for the analog version of the controller for the present invention incorporating current feedback monitoring circuitry;
Figure 6 is a graph of the exemplary response curve of Figure 2 showing how the "low assist" region can be modified by the break point input signal (Figure 4);
Figure 7 is a graph of the exemplary response curve of Figure 2 illustrating how the slope of the curve can be modified by varying the gain of the variable gain amplifier illustrated in Figure 4;
Figure 8 is a graph of a series of exemplary response curves illustrating how the amplitude range of the system can be modified in accordance with vehicle speed to provide different ranges of power assist at different vehicle speeds; and
Figure 9 is a schematic diagram of a digital embodiment of the controller for the present invention incorporating a microcomputer for providing a pulse width modulated (PWM) control signal to effect PWM control over the EVO actuator.

### Detailed Description of the Preferred Embodiments

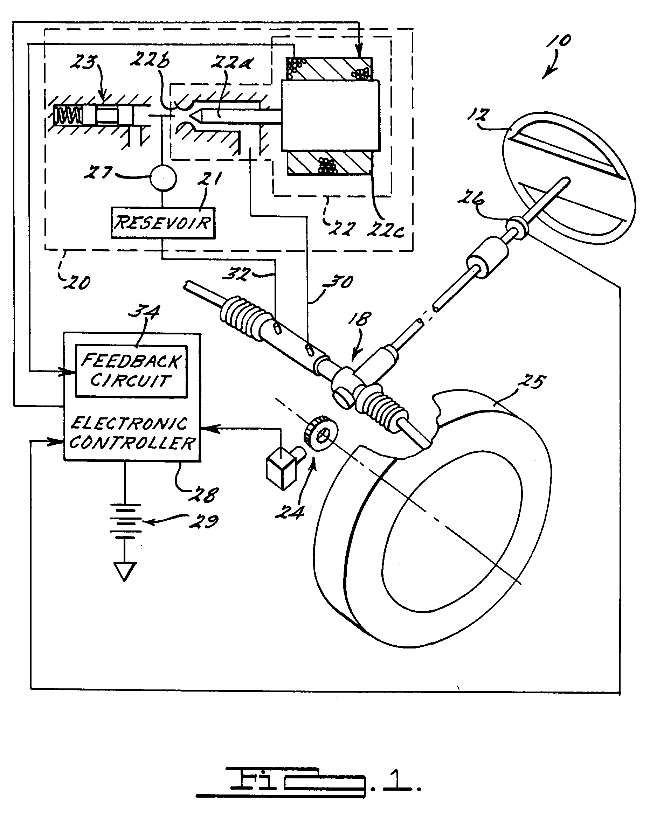

Referring to Figure 1, a pictorial representation of a controlled torque power assist steering system **10** in accordance with a preferred embodiment of the present invention is shown. The vehicle steering system includes a steering wheel **12**, a steering column **16** coupled to the steering wheel **12**, and a conventional rack and pinion steering gear mechanism **18** responsive to the steering column **16** and also to a hydraulic power assist mechanism **20**. The hydraulic power assist mechanism **20** incorporates a proportionally actuatable fluid flow valve in the form of a well-known electronically variable orifice ("EVO") actuator **22**, a conventional pressure relief or bypass flow control valve **23**, and a conventional power steering pump **27** in fluid communication with a power steering fluid reservoir **21**. The EVO actuator **22** itself includes a valve member **22a**, an orifice **22b** and a solenoid coil **22c**. An optional speed sensor **24** is also illustrated which is operationally associated with a wheel **25** of the vehicle to sense the vehicle's ground speed. Speed sensors are typically provided for other purposes on a vehicle, such as for cruise control and anti-skid brake control systems, and therefore are already present on most vehicles.

The controlled torque power assist steering system **10** according to the present invention includes a torque sensor **26**, preferably coupled to the steering column **16**, and an electronic controller **28**. The controller **28** is responsive to an output signal from the torque sensor **26** and, alternatively, to the speed signal from the speed sensor **24** as well, to generate a control signal that is provided to the EVO actuator **22** to control the level of assist and produce the desired steering effort at the steering wheel **12**. A power source, represented by the vehicle battery **29**, provides a current source which the controller **28** modulates to generate a current drive signal to be applied to the EVO actuator **22**. The current drive signal is used to modulate the EVO actuator **22** to control the open area of the orifice **22b**. Modulating the EVO actuator **22** thus controls the rate of flow of power steering fluid to and from the steering gear mechanism **18** via fluid supply and return conduits **30** and **32**, respectively. A current feedback circuit **34**, which in the preferred embodiments forms part of the electronic controller **28**, enables the controller **28** to monitor the actual current flow to the EVO actuator **22** to maintain a predetermined constant current signal for a given voltage control signal regardless of variations in battery voltage or coil impedance.

In general operation, as the vehicle operator urges the steering wheel **12** clockwise and counterclockwise while steering the vehicle **14**, the torque sensor **26** senses the torque being applied to the steering column **16** via the steering wheel **12**. The torque sensor **26** generates a torque signal in response to, and in relation to, the magnitude of the applied torque, which is supplied to the controller **28**. The controller **28** then determines the appropriate current control signal to be applied to the EVO actuator **22** based upon a predetermined system response curve to achieve the desired steering effort. Alternatively, the controller **28** may determine the appropriate current control signal value from a selected one of a plurality of system response curves depending upon the speed of the vehicle as well. The current control signal causes the EVO actuator **22** to controllably move the valve member **22a** towards and away from the orifice **22b**, which is in fluid communication with the power steering pump **27**, to thus vary the area of the orifice **22b** through which fluid may flow. This controllably modulates the rate of fluid flow through the orifice **22b** in relation to the magnitude of the sensed steering wheel torque being exerted by the driver. Accordingly, the rate of fluid flow through the conduits **30** and **32** to and from the steering gear **18** is modulated to provide a variable level of power assist to the steering-gear **18** in relation to the sensed steering wheel torque.

Thus, the present control system **10** operates in real-time to allow the level of power assist to be varied virtually instantaneously in response to the sensed steering wheel torque.

Although other mounting locations may be suitable, the torque sensor **26** is preferably mounted directly to the steering column **16**. Additionally, the controller **28** may also be mounted with the torque sensor **26** in a single housing to provide an integrated assembly which is easy and convenient to install on the vehicle. Alternatively, the controller **28** may be mounted underneath the dashboard of the vehicle or in the engine compartment if space is restricted within the passenger compartment of the vehicle. Still further, while the EVO actuator **22** comprises the presently preferred type of fluid flow regulator valve for use with the system **10**, it should be appreciated that virtually any form of fluid flow valve adapted to control the rate of flow of hydraulic fluid in proportional response to a varying electrical control signal could be readily incorporated in lieu of the EVO actuator **22**.

By sensing the actual torque applied to the steering wheel **12** by the driver, and controlling the level of power assist provided in accordance with the sensed steering wheel torque, the system **10** is able to respond more quickly and positively to sudden, abrupt steering maneuvers, such as evasive steering maneuvers, than systems employing conventional handwheel sensors. This is because the system **10** senses the actual torque required to initiate an evasive steering maneuver rather than the resulting movement of the steering wheel, and responds virtually instantaneously to adjust the level of power assist provided to the steering mechanism of the vehicle. The controlled torque system **10** of the present invention further inherently compensates for normal wear in the steering gear mechanism, and thus maintains a more uniform level of power assist under adverse vehicle operating conditions such as where tire pressure is lost suddenly or when the supply of power steering fluid is lower than desired.

Another advantage provided by the system **10** of the present invention is that by directly monitoring steering wheel torque, vehicle-to-vehicle variability in the actual level of steering effort required by the vehicle operator is virtually eliminated. Thus, variations in system voltage, steering pump fluid flow, valve leakage, steering wheel shaft universal joint friction, variable orifice tolerances, and torque bar variation are all automatically compensated for by controlling the level of steering assist directly in response to the sensed steering wheel torque.

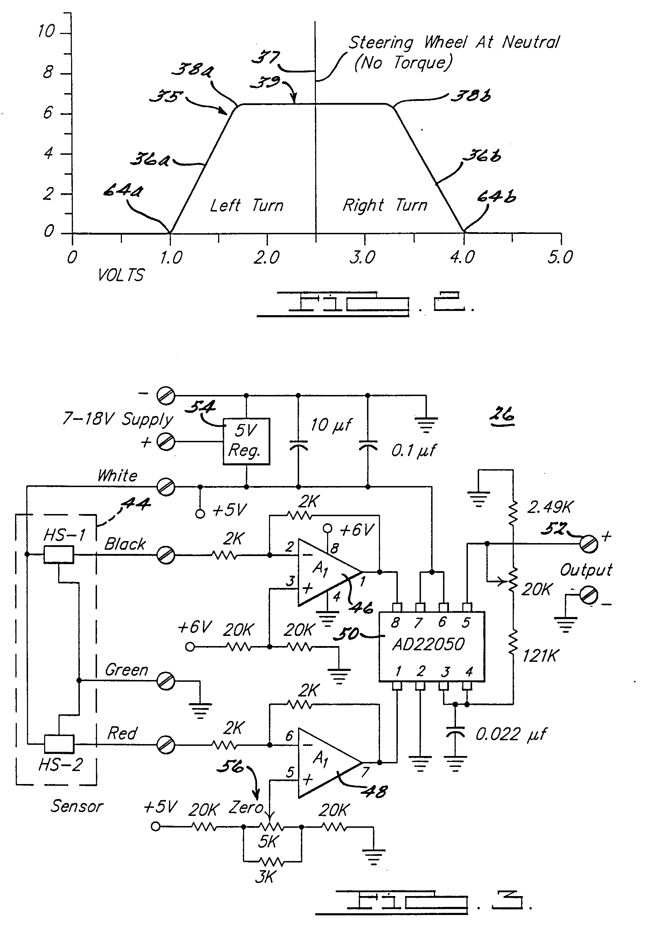

Turning now to Figure 2, a graph of an exemplary response curve **35** for the system controller **28** is shown. The x-axis of the graph corresponds to the output signal from the torque sensor in volts and the y-axis corresponds to the current control signal to the EVO coil in milliamps. In the present system, a decrease in the current signal to the EVO controller equates to a greater level of assist.

The voltage signal from the torque sensor **26** is adapted to vary between approximately 0 and +5 volts with the torque sensor **26** preferably calibrated to provide a DC voltage signal of +2.5 volts when no torque is being exerted on the steering wheel **12** by the driver. Consequently, movement along the horizontal axis from 2.5 volts toward zero volts represents increasing steering effort in one direction, and movement from 2.5 volts toward 5.0 volts represents increasing steering effort in the other direction. It will be appreciated, however, that these values could be modified, and that the important consideration is that the signal representative of zero torque preferably be approximately centered within the output voltage range of the torque sensor **26**.

Thus, as the driver exerts increasing torque on the steering wheel **12** in the clockwise direction, the voltage output of the torque sensor **26** will, for example, increase from the neutral +2.5 volt midpoint, designated **37**. When the steering wheel **12** is urged in the opposite direction (i.e., counterclockwise), the output voltage of the torque sensor **26** will, for example, decrease from the 2.5 volt midpoint **37**. Significantly, it will be noted that when the system is in the quiescent or null condition (i.e., zero steering torque), the current signal to the EVO actuator is at its maximum level, which equates to the minimum system level of assist. This minimum level of assist is preferably maintained over a predetermined low level torque range centered around the 2.5 volt null point **37** represented by the flat portion of the curve designated **39**. Consequently, below a predetermined first level of steering wheel input, designated by points **38a** and **38b** on the curve **35**, the control system essentially functions as a manual steering system with minimal power assist being supplied. When operated in this region of minimum power assist, the fluid pressure in the power steering system is also at a minimum, typically around 2 psi, thereby also minimizing loading on the power steering pump and hence on the engine. Since most vehicles operate in this region the majority of the time, the present system thus improves the operating efficiency of the vehicle when compared with conventional variable assist power steering systems which typically provide a high level of power assist at low vehicle speeds, regardless of the level of steering effort inputted by the driver.

Returning to the diagram in Figure 2, as steering torque sensed by the torque sensor **26** increases beyond the initial "low assist" region **39**, the desired level of power steering assist preferably increases in a linear fashion. Consequently, the control signal to the EVO valve is reduced accordingly, as represented by the portions of the curve designated **36a** and **36b**, until points **64a** and **64b** are reached, which represent the maximum level of power steering assist.

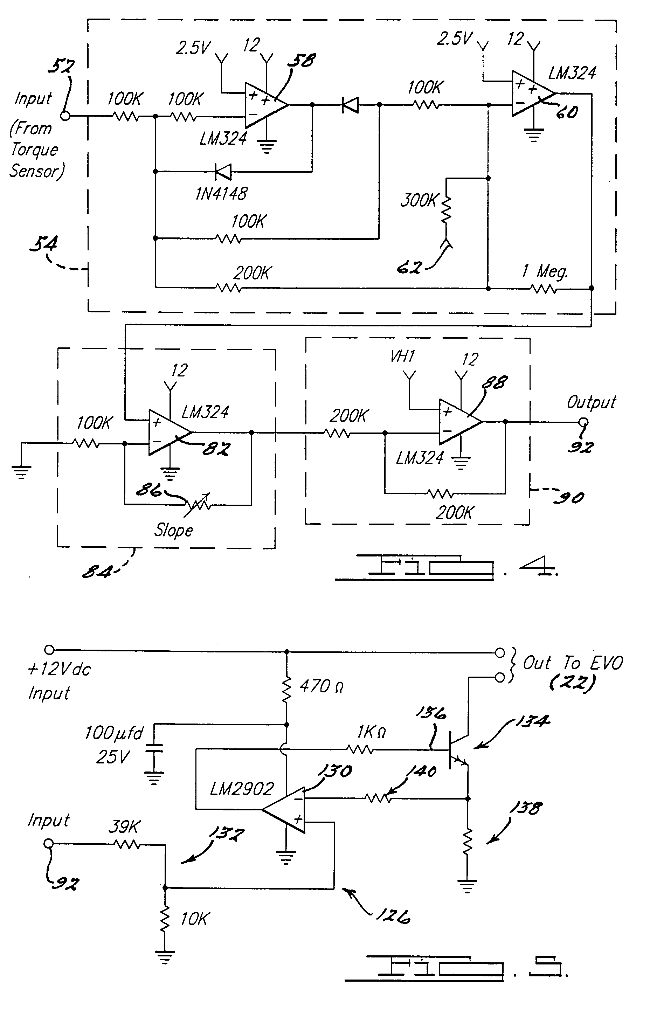

Turning now to Figure 3, a preferred form of the torque sensor **26** is shown. This torque sensor circuit is commercially available from Magnetoelastic Devices, Inc., 17 Downing Three, Pittsfield, Massachusetts 01201, as model G3. This preferred torque sensor includes a torque transducer **44** having outputs coupled to a pair of operational amplifiers **46** and **48**. The outputs of the amplifiers **46** and **48** are coupled to the inputs of a differential amplifier **50**. The differential amplifier **50** produces an output signal between 0 to +5 volts DC. This form of torque sensor is adapted for use with a supply voltage ranging from about +7 to +18 volts DC and further includes its own +5 volt regulator circuit **54**. An offset adjustment **56** is provided so that the torque sensor can be calibrated to provide a relatively precise output of +2.5 volts DC when no steering torque is being exerted on the steering wheel **12**.

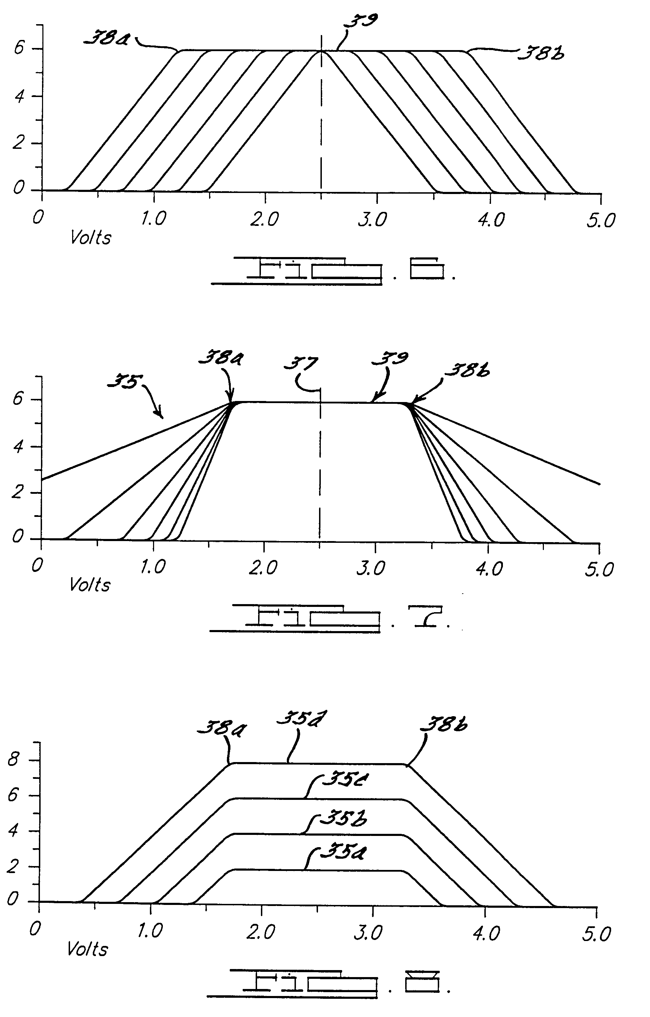

Referring to Figure 4, an analog circuit version of the controller **28** according to the present invention is shown. The output signal **52** from the torque sensor circuit **26** is provided to an absolute value detector circuit **54** including a first operational amplifier **58** and a second operational amplifier **60**. The inverting input of the first amplifier **58** is coupled to the output **52** of the torque sensor circuit **26** and therefore receives the 0 to +5 volt DC output signal from the torque sensor **26**. The non-inverting input of each amplifier **58** and **60** is further coupled to a +2.5 volt DC reference signal. The inverting input of the second amplifier **60** is further coupled to a "break point" voltage input **62** which sets the width of the "low assist" region **34** of the response curve illustrated in Figure 2. In other words, the value of the reference signal applied to input **62** determines the location of break points **38a** and **38b** (Figure 2) between which changes in the voltage signal from the torque sensor produce no change in the output from the detector circuit **54**. The output from the second amplifier **60**, outside of the break point voltage range, is linearly proportional to the absolute value of the difference between the output from the torque sensor **26** and the +2.5 volt midpoint (i.e., the "null") voltage. Put differently, the output signal from the amplifier **60** for a +1.5 volt DC torque sensor output signal is the same as that for a +3.5 volt DC output signal from the torque sensor **26**. In this example, the detector circuit **54** provides an output signal that is proportional to the absolute value of the difference (i.e., 1.0 volts).

Thus, the absolute value detector circuit **54** creates a "no response" zone **39** between the voltage boundaries of break points **38a** and **38b**. This range is defined as noted by the magnitude of the DC voltage signal applied to the break point voltage input **62**. Within this zone **39**, a change in the output of the torque sensor **26** caused by steering wheel torque exerted either in a clockwise direction or a counterclockwise direction from a neutral point **37** (where the steering wheel **12** is at rest and experiencing no steering torque) does not result in any change in the output of the absolute value detector **54**. However, for torque sensor outputs in either the clockwise or counterclockwise direction outside this range **39**, the output voltage of the absolute value detector **54** drops linearly, as indicated by portions **36a** and **36b** in Figure 2, until the maximum assist level is reached at points **64a** and **64b**. In particular, as the output signal from the absolute value detector circuit **54** diminishes, the current signal to the EVO actuator **22** is reduced accordingly, thereby increasing the level of power assist. However, once the maximum assist level at points **64a** and **64b** is attained, further increases in sensed steering effort input produce no further changes in the output of the absolute value detector circuit **54** and hence the system remains at the maximum power assist level.

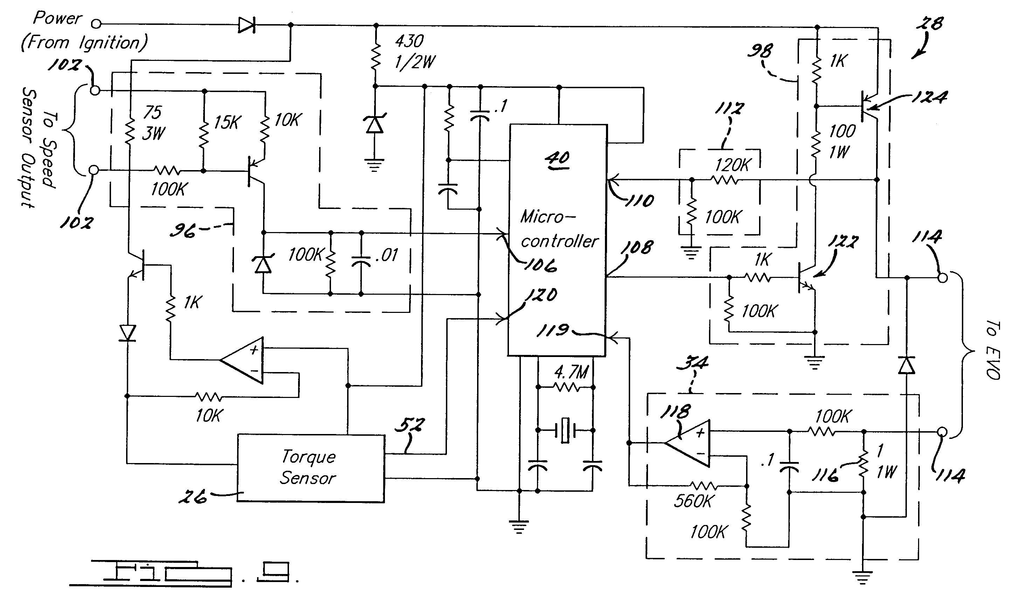

Referring momentarily to Figure 6, the effects of changing the voltage signal applied to the break point voltage input **62** can be seen. As illustrated in the graph, as the break point voltage is varied, the range of the "no response" zone **39** varies accordingly. Consequently, by appropriate selection of the break point voltage, the desired response of the system **10** can be adapted to suit the requirements of specific vehicle applications.

Returning to Figure 4, the output of the detector circuit **54** is applied to the non-inverting input of an operational amplifier **82** of a variable gain amplifier circuit **84**. The variable gain amplifier circuit **84** includes a variable resistor **86** by which the gain of the amplifier **82**, and thus the response of the system **10**, can be selectively adjusted to increase or decrease the proportional rate of change of the output signal from the absolute value detector **36** to changes in sensed steering torque.

Referring briefly to Figure 7, the variations in the slope of the system response curve **35** as a result of changes in the gain of the variable gain amplifier circuit **84** are shown. It should also be noted that the "no response" zone **39** region is unchanged. Consequently, by changing the setting of variable resistor **86**, the rate at which the level of assist increases in response to increasing levels of handwheel torque input can be varied to achieve the steering response desired.

Returning again to Figure 4, the output of the amplifier **82** of the variable gain amplifier circuit **84** is coupled to the inverting input of another operational amplifier **88** of an inverting amplifier circuit **90**. The non-inverting input to operational amplifier **88** is connected to receive the output signal VH1 from the vehicle speed sensor **24** (Figure 1). The VH1 signal comprises an analog signal the magnitude of which is proportional to the speed of the vehicle. The amplifier circuit **90** operates to modify the amplitude range of the output signal from the variable gain amplifier **84** based on the magnitude of the signal from the vehicle speed sensor **24**. In particular, the greater the speed of the vehicle, the lower the amplitude range of the output signal from amplifier circuit **90**, and hence the lower the level of power assist that will be applied to the steering mechanism **18**.

The resulting change in the system response curve **35** for different vehicle ground speeds is illustrated in Figure 8. For example, at vehicle speeds at or below 10 mph, the system response curve at output **92** may correspond to curve **35a**. At vehicle speeds between 10 and 30 mph, the system response may correspond to curve **35b**. Additionally, curve **35c** may correspond to the system response for vehicle speeds between 30 and 60 mph, and curve **35d** may correspond to the system response for vehicle speeds greater than 60 mph. It will also be noted that the voltage break points **38a** and **38b**, as well as the slope of the curves in regions **36a** and **36b**, are unaffected by the changes in vehicle speed. Thus, the magnitude of the output control signal at point **92** is modified in accordance with the vehicle speed to provide a lesser degree of assist to the steering mechanism **18** for a given torque input at higher vehicle speeds, and a greater degree of assist for a given torque input at lower vehicle speeds.

Referring now to Figure 5, a preferred embodiment of an analog drive circuit **126** is shown. The analog drive circuit **126** is adapted to produce a current drive signal to the EVO control valve **22** that is constant for a given voltage control signal at output **92** from the control circuit shown in Figure 4. In particular, the voltage control signal at input **92** is provided through a resistor divider network **132** to the non-inverting input of a comparator amplifier **130**. The output of the comparator amplifier is connected to the base **136** of a Darlington drive transistor **134** which controls the supply of current to the EVO control valve **22**. Specifically, the collector-emitter terminals of the drive transistor **134** are connected in series with the EVO control valve **22** between the 12-volt DC battery supply and ground through a current sensing resistor **138**. The signal off the current sensing resistor **138**, which is proportional to the actual current flow through the EVO control valve **22**, is fed back to the inverting input of the comparator amplifier **130**.

In operation, the amplifier **130** generates a drive signal which controls the conduction of output drive transistor **134**. The magnitude of the drive signal supplied to the base **136** of transistor **134** is proportional to the difference between the input control signal **92** and the current sensing signal from sense resistor **138**. The transistor **134** in turn causes a proportional current drive signal to be applied to the EVO actuator **22** to thereby control the degree of fluid flow through the EVO actuator **22**. In turn, this controls the level of power assist provided to the steering mechanism **18**. The sensed current feedback signal applied to the inverting input of the amplifier **138** ensures that the desired level of drive current flows through the EVO control valve **22**, regardless of fluctuation in the supply voltage or variations in the impedance of the EVO actuator **22.**

Referring now to Figure 9, a detailed circuit diagram of a digital microcomputer-based version of the electronic controller **28** according to the present invention is shown. The torque sensor **26** has been drawn in simplified block form and corresponds to the torque sensor circuit shown in Figure 3. The controller **28** shown in Figure 9 is intended to function in an equivalent manner to the analog version of the controller described above and illustrated in Figures 4 and 5. The 0 to +5 volts output signal **52** from the torque sensor **26** is provided to an analog-to-digital input port 120 of the microcomputer **40**. The output from the speed sensor **24** (Figure 1) is supplied to the input **102** of a signal conditioning circuit **96** which "squares up" the pulse train signal from the sensor. In particular, signal conditioning circuit **96** produces a generally square wave signal whose frequency is proportional to the ground speed of the vehicle. This vehicle speed signal is then applied to an interrupt input **106** of the microcomputer **40**. The microcomputer **40** has programmed within its resident memory the desired response curve of the system such as illustrated in Figure 2. In addition, in a further preferred form of the present invention, the microcomputer **40** is programmed with a plurality of desired response curves, such as shown in Figure 8. Thus, for example, the microcomputer **40** may use response curve **35a** for vehicle speeds below 10 mph, curve **35b** for vehicle speeds between 10 mph and 30 mph, curve **35c** for vehicle speeds between 30 mph and 60 mph, and curve **35d** for vehicle speeds above 60 mph.

Alternatively, the plurality of stored response curves may be provided with different break points **38a** and **38b** and/or different slopes **36a** and **36b** to achieve the overall system response desired. For example, in certain vehicle applications, particularly with high performance vehicles, it may be desirable to reduce the slope of the response curve at higher vehicle speeds relative to the slope of the response curve used for slower vehicle speeds. Similarly, it may be desirable to provide a somewhat narrower "no response" zone 39 in the response curve used at slower vehicle speeds than that used at higher vehicle speeds. In other words, the different response curves need not all have the same break points **38a** and **38b** and slopes **36a** and **36b** as represented by the exemplary set of response curves illustrated in Figure 8.

Consequently, in accordance with the input signal from the torque sensor **26** and the present speed of the vehicle as sensed by the speed sensor **24**, the microcomputer **40** is programmed to generate an appropriate high frequency pulse width modulated (PWM) control signal at output port **108** that will result in the desired amount of current flow through the EVO valve **22**. In particular, the PWM control signal from output port **108** is provided to a drive circuit **98** comprised of switching transistor **122** and a drive transistor **124** which is connected in series with the EVO control valve via outputs **114** and a current sensing resistor **116** between the battery power source and ground. The output terminal **114** is further returned to an input **110** of the microcomputer **40** through a voltage divider network **112** to enable the microcomputer **40** to detect a short circuit in the EVO coil **22c**.

The duty cycle of the PWM control signal generated by the microcomputer **40** at output port **108** is directly related to the desired magnitude of the current signal to be supplied to the EVO control valve. The application of the PWM control signal to the base of transistor **122** causes the transistor to rapidly cycle on and off in accordance with the duty cycle of the control signal. Switching transistor **122** in turn controls the conduction of drive transistor **124** which thereby causes the PWM drive current signal to be applied at output **114** to the EVO control valve. The duty cycle of the PWM drive current signal thus modulates the EVO actuator **22** to control the area of its orifice opening to control the fluid flow through the EVO actuator **22** and, consequently, the level of power assist provided to the steering mechanism **18**.

Lastly, the controller **28** includes a current feedback circuit **34** which includes the current sensing resistor **116** and an operational amplifier **118** whose output is fed back to an input **119** of the microcontroller **40** to provide a closed-loop current sensing circuit. In particular, the microcomputer **40** is programmed to compare the actual current flowing through the EVO control valve **22**, as sensed by the feedback signal supplied to input port **119** from the feedback circuit **34**, with the desired drive current value and adjust the duty cycle of the PWM drive signal generated at output port **108** accordingly. Thus, the controller **28** is able to maintain a desired constant current flow through the EVO control valve **22** despite variations in battery voltage or coil impedance of the EVO control valve.

The various preferred embodiments described herein thus allow the level of power assist applied to a steering mechanism to be accurately controlled in relation to the torque exerted on the steering wheel of a vehicle. By sensing the torque being exerted on the steering wheel, the system is able to respond faster than would be possible using a conventional handwheel rate sensor.

By sensing the instantaneous torque being exerted on the steering wheel, the present system can determine, virtually instantaneously, the appropriate level of power assist with little or no movement of the steering wheel. As an example, if a blowout of one of the two front tires occurs while traveling at a relatively high speed, the vehicle will tend to veer towards the side of the blown tire. To counteract this tendency, the driver may need to exert a substantial torque to the steering wheel in the opposite direction to keep the vehicle on a straight course. With a conventional variable assist power steering system using a handwheel rate sensor, this emergency situation would not be detected because the steering wheel is being held in a relatively constant position. By directly monitoring the torque being exerted on the steering wheel, however, the present system is able to immediately detect the need for an increased level of power assist and to control the supply of fluid to the hydraulic power assist mechanism accordingly. The present system **10** is also believed to represent a more cost effective approach to a variable level power assist system than systems employing a traditional handwheel rate sensor which is typically more expensive than a torque sensor.

In addition, because the present control system defaults to a low assist level rather than a high assist level in the "null" steering condition, the power steering pump is minimally loaded a substantially greater percentage of the time, thereby improving engine efficiency.

Another significant advantage of the preferred embodiments of the present invention is that by sensing the torque being exerted on the steering wheel, the affects of various tolerances and variations in various components of the steering system of the vehicle are automatically compensated for. Thus, variations in fluid pump pressure, system voltage, steering mechanism construction and tolerances, as well as variations in the EVO actuator, do not affect the desired performance of the system.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, specification and following claims.

## Claims

1. A controlled torque power assist steering system for varying the level of power assist applied to a steering system of a vehicle based on the torque exerted on the steering wheel by a driver, said system comprising:
a torque sensor for sensing the torque exerted on the steering wheel by the driver and generating a torque signal in accordance therewith; and
a controller responsive to said torque signal for controlling the degree of power assist provided to said steering system in accordance with said torque signal to thus control the degree of steering effort required to steer the vehicle.

2. The system of claim 1 further comprising:
a speed sensor for sensing the ground speed of the vehicle and generating a speed signal in accordance therewith, and wherein said controller is further responsive to said speed signal for varying the degree of power assist provided to said steering system for a given torque signal.

3. The system of claim 1 wherein said controller is adapted to provide a minimum level of power assist for torque signals below a predetermined value.

4. The system of claim 1 wherein said power assist steering system includes a fluid pump for supplying fluid under pressure to a steering mechanism and an electrically controllable valve member interconnected between the pump and the steering mechanism for controlling the flow of fluid to the steering mechanism in accordance with the value of a current drive signal supplied thereto.

5. The system of claim 4 wherein said controller further includes a constant current drive circuit for supplying a constant current drive signal to said controllable valve member for a given torque signal value.

6. The system of claim 5 wherein said constant current drive signal comprises a pulse width modulated signal.

7. A method of controlling the level of power assist provided to a steering system of a vehicle having a driver-operated steering wheel, comprising the steps of:
monitoring the amount of torque exerted on the steering wheel by the driver of the vehicle;
providing a minimum level of power assist when the amount of torque exerted on the steering wheel is below a first predetermined level; and
progressively increasing the level of power assist as the amount of torque exerted on the steering wheel increases above said first predetermined level.

8. The method of claim 7 further including the steps of monitoring the speed of the vehicle and modifying said minimum level of power assist in accordance with the speed of the vehicle.

9. The method of claim 8 further including the step of modifying the level of power assist for a given level of torque exerted on the steering wheel in accordance with the speed of the vehicle.

10. In a hydraulic power steering system for a vehicle having a driver-operated steering wheel and comprising a fluid pump driven by the engine of the vehicle for supplying fluid under pressure to a steering mechanism of the vehicle and a controllable valve member interconnected between the pump and the steering mechanism for controlling the flow of fluid to the steering mechanism and hence the level of power assist provided by the steering system, the method of controlling the controllable valve member comprising:
monitoring the amount of torque exerted on the steering wheel by the driver of the vehicle; and
controlling said controllable valve member in accordance with the amount of torque exerted on the steering wheel so that a relatively low level of power assist is provided when the steering wheel torque is below a first predetermined level, thereby minimizing the loading on said pump and improving the operating efficiency of the engine.

11. The method of claim 10 further including the step of progressively increasing the level of power assist as the amount of torque exerted on the steering wheel increases above said first predetermined level.

12. The method of claim 11 further including the steps of monitoring the speed of the vehicle and modifying said relatively low level of power assist in accordance with the speed of the vehicle.

13. The method of claim 12 further including the step of modifying the level of power assist for a given level of torque exerted on the steering wheel in accordance with the speed of the vehicle.

14. A method of controlling the level of power assist provided to a steering system of a vehicle having a driver-operated steering wheel, comprising the steps of:
establishing a predetermined steering wheel torque versus level of power assist relationship;
sensing the amount of torque exerted on the steering wheel by the driver of the vehicle; and
providing a desired level of power assist in accordance with the amount of sensed steering wheel torque based upon said predetermined steering wheel torque versus level of power assist relationship.

15. The method of claim 14 further including the steps of sensing the speed of the vehicle;
establishing a plurality of predetermined steering wheel torque versus level of power assist relationships; and
providing the desired level of power assist in accordance with the amount of sensed steering wheel torque by selecting the appropriate one of said plurality of predetermined relationships in accordance with the sensed vehicle speed.
